# EUROPEAN PATENT SPECIFICATION

(11) **EP 2 335 907 B1**
(45) Date of publication and mention of the grant of the patent: **11.02.2015**
(21) Application number: 09400059.3
(22) Date of filing: 16.12.2009
(51) Int. Cl.: B29C 70/46, B29C 70/44, B29C 70/48, B29C 33/76

(54) **Method of fabricating a molded part using a molded core**
Verfahren zur Herstellung eines Formteils unter Verwendung eines Kerns
Procédé de fabrication d'une pièce moulée utilisant un noyau

(43) Date of publication of application: 22.06.2011
(73) Proprietor: AIRBUS HELICOPTERS DEUTSCHLAND GmbH, 86609 Donauwörth (DE)
(72) Inventor: Kunze, Steffen, 83620 Vagen (DE); Wellhausen, Christian, 85521 Ottobrunn (DE)
(74) Representative: Pouillot, Laurent Pierre Paul

(56) References cited:
- DE-A1- 10 342 867
- FR-A1- 2 745 745
- US-A- 3 321 347

## Description

The present invention relates to the general technical field of fabricating hollow parts, e.g. parts based on metallic or organic materials, and including reinforcement, e.g. based on fibers and a matrix or resin.

Such parts are obtained for example by methods of molding a composite material, e.g. reinforced with fibers, and using a mold core. The reinforcement may be made from at least one laminar layer of fibers or fabrics placed on the mold core prior to impregnating with a resin, or from layers that are preimpregnated with a resin, also known as semi-finished materials or "Prepreg" materials, that are placed on said mold core. Such composite materials comprise for instance epoxy resin based infusion resins, benzoxazine based infusion resins, phenolic resins, wet laminating resins (epoxy, phenolic) or thermoplastic matrices.

The molding methods used may be constituted, for example, by vacuum infusion (V.I.) methods or by resin transfer molding (R.T.M.) methods. This means that both open and closed mold concepts can be applied in the frame of the invention.

These methods are themselves known and consequently they are not described further in the present description.

The present invention relates more particularly to fabricating reinforced hollow parts in particular with undercuts, by molding, with the parts presenting shapes that have projecting portions such as raised portions, enlargements, shoulders, or the like, from which it is often difficult or even impossible to extract the mold core.

In order to handle that kind of problem, it is known during molding operations to make use of cores that are removable, for instance soluble in water or in some other liquid or removable by any other means (e.g. vibration). By removable one should understand soluble or any physical or chemical principle that permits to remove the core.

To obtain sufficient solubility together with low density, the materials constituting such mold cores are generally open cellular materials.

Such a structure for mold cores requires them to be sealed with a material that is suitable for preventing a material that is to constitute a future molded part, such as a molten metal or a resin, from infiltrating into said core.

By way of example, the sealing material is usually a polyamide (PA) film. The sealing means could also comprise thermoplastic films or coatings, carbon nanotube papers "bucky papers", PTFE films (Tedlar™ films) or phenolic resins.

The sealing material also serves to prevent the material constituting parts that are obtained by molding, or portions of said parts, from being contaminated by the material constituting the mold core.

By way of example, document DE 10 2005 011 930 discloses fabricating removable mold cores that are provided with sealing means referred to as a "vacuum film". The cores described present sealing means that are impermeable to gases and to liquids. The sealing means are applied intimately over the entire outside surface of the core so as to fit as closely as possible to the shape thereof. After the step of extracting the mold core from the solid molded part, the sealing means are either extracted in turn from the part by performing additional operations, or else they are left permanently inside the part. When left inside, the sealing means pointlessly increase the weight of the molded part.

Molded parts obtained in that way also present other drawbacks in various applications. Such parts, often subjected to very high levels of mechanical, chemical, or thermal stress, require additional treatment, e.g. in the form of coatings etc. for imparting the required properties thereto. This requires devising specific fabrication steps and consequently additional workstations in fabrication lines.

Furthermore, it is often difficult, if not impossible, for hollow parts presenting inside shapes or cavities that are complex to receive one or more coatings in accurate and uniform manner. It is then not possible to ensure that such parts are reliable when placed with various stresses and constraints.

It should also be observed that implementing such fabrication steps gives rise to additional fabrication costs.

The document FR2745745 proposes to form a solid core made from a rigid material, e.g. sand or wax, inside an inflatable vessel, and to apply a protective coating to the surface of the latter. The protective coating is baked, is covered with resin-impregnated fibres and placed in a mould. After the inner core has been removed, the resin is polymerized in an autoclave, the inflatable vessel is removed. Prior to application of the resin-impregnated fibres, the protective coating can be prepared by sand-blasting or applying a bonding primer, and after polymerization or before it has been completed, the polymer layer can be given an outer coating, e.g. of an elastomer film layer.

The document US3321347 describes making a metallic lined pressure vessel using a method according to the preamble of claim 1.

The object of the invention as defined by the claim 1 consequently seeks to provide a molding method that is particularly simple and that presents novel properties and functions enabling it to simplify known methods of fabricating molded parts.

The present invention thus seeks to provide a novel molding method enabling reinforced parts to be made that present novel functions and properties, but without thereby increasing the complexity of their fabrication.

The objects given to the invention are achieved with the help of a molding core, which does not form part of the invention for making a composite part based on at least one composite material comprising fibers, fabrics, or textiles and an impregnation matrix, said mold core comprising a solid or liquid filler material that is removable, said filler material presenting a shape that is determined as a function of the part to be molded, said mold core also comprising sealing means covering the entire outside surface of the filler material, and the core being characterized in that the sealing means exhibits a physical or chemical bond with the composite matrix and providing thermal, mechanical, physical, and/or chemical properties that are additional to those of the other materials constituting the composite part.

The objects given to the invention are achieved by a method according to claim 1.

According to the method of the invention, the sealing means include at least one binder material selected from a family of materials comprising polyamide (PA) films, thermoplastic films or coatings, carbon nanotube papers "bucky papers", PTFE films (Tedlar™ films) or thermoset resins (e.g. phenolics, benzoxazines, epoxies, ...).

According to the method of the invention, the mold core includes at least one additional material is selected from any family of materials that increase the mechanical strength, toughness and the resistance to impacts of the sealing means or selected from any family of materials that increase the anti-abrasive properties of the sealing means.

In an embodiment which does not form part of the invention, the at least one additional material is selected from any family of materials that increase the surface strength of the sealing means against chemical or biological attack.

In an embodiment which does not form part of the invention, the at least one additional material is selected from any family of materials, that make the sealing means non-flammable or that provide flame retardancy properties or properties reducing the emissions of smoke or toxic substances when on fire.

In an embodiment which does not form part of the invention, the at least one additional material is selected from any family of materials such as thermoplastic materials that encourage bonding of the sealing means with another element by thermoplastic welding.

The removable filler material is selected from any family of removable materials (e.g. soluble).

In an implementation in accordance with the invention, the method consists in dissolving the removable filler material after the operation of solidifying the part.

In an implementation in accordance with the invention, the method comprises steps specific to an R.T.M. method for performing the resin-impregnation operation and the solidification operation.

R.T.M. methods (resin transfer molding methods) are themselves known and are not explained in greater detail in the present invention.

In another implementation in accordance with the invention, the method comprises the steps specific to a V.I. method for performing the resin-impregnation operation and the solidification operation.

V.I. methods (vacuum infusion methods) are themselves known and are not described in greater detail in the present description.

In an implementation in accordance with the invention, the method consists in covering additional inner and outer surfaces of the composite part with the functional coating.

In an implementation in accordance with the invention, the method consists in selecting the sealing means having a melting temperature lying between the injection/infusion temperature of the matrix/resin and the curing temperature of the composite part. A bonding between the sealing means and the composite matrix is obtained in such an embodiment. The injection/infusion temperature of the matrix/resin is approximately 120°C and the curing temperature of the composite part is approximately 185°C.

In another implementation in accordance with the invention, the method consists in selecting the sealing means having a melting temperature which is higher than the curing temperature of the composite part. The entire sealing means remains on the composite part in such an embodiment.

In another implementation in accordance with the invention, the method consists in selecting the sealing means comprising at least two layers, one layer having a melting temperature which is lower than the injection/infusion temperature of the matrix/resin, the other layer having a melting temperature which is higher than the injection/infusion temperature of the matrix/resin. Only a part of the sealing means remains on the composite part in such an embodiment.

The mold core presents the huge advantage of being simple to fabricate. The mold core is fabricated in known manner. It is the sealing means of said core that incorporate novel and permanent functions and properties such as resistance to fire, resistance to chemical attack, adhesive properties, or mechanical strength to the composite part that is built with the core acting as a tooling. The method of fabricating a mold core in accordance with the invention is practically unaltered. Only the composition and/or the structure of the sealing means is/are modified.

The mold core thus enables novel functions and properties to be transferred into a molded part by using previously-known molding methods and without modifying said methods. This gives rise to manifest economic advantages.

The core also presents the advantage of combining novel functions with functions such as sealing, semi-permeability, and solubility.

In addition, there is no need to confer anti-adhesive properties to the sealing means for preventing it from bonding with the impregnation resin, insofar as the sealing means are designed to remain permanently inside the molded part. On the contrary, obtaining a stronger mechanical and/or chemical bond is desirable

The molding method in accordance with the invention presents the advantage that it confers novel functions and properties on the molded part directly as a result of the part being molded, and that it does so without a subsequent processing or machining step.

The molding method in accordance with the invention presents the advantage that it confers novel functions and properties on the molded part without that making it necessary to modify previously-known molding operations or to transform known molding devices. It is only the provision of the sealing means for the mold core that needs to be adapted in order to confer said novel properties and functions.

The molding method in accordance with the invention also presents the advantage that the molded part automatically presents improvements concerning flammability-smoke-toxicity (FST) properties and concerning its thermal, mechanical, and chemical properties, providing a suitable additional material is selected.

The molding method also presents the advantage that the molded part automatically presents a surface adapted to fastening inserts, e.g. by heat sealing, thermoplastic welding or any connection/joining technology, without requiring additional processing or machining.

The molding method also presents the advantage that the molded part may automatically present properties that are good for subsequent processing, e.g. applying and fastening inserts or laminar layers of materials reinforced by fibers, etc.

The molding method in accordance with the invention also presents the advantage that the molded part may automatically present a significant improvement in its impermeability properties relative to liquids and/or gases.

The impact protection, the sealing against media or biological contamination, the chemical resistance and the resistance against bacteria or other harmful substances in service are also improved. The surface preparation/optimization, for example the bonding preparation and/or the anti-abrasive properties and/or the coloring properties, are also improved.

The molding method also presents the advantage that the ultrasonic testing capabilities due to a better quality of the inner surface of the composite part are enhanced.

The invention and its advantages appear in greater detail from the following description of an embodiment given by way of illustration with reference to the accompanying figures, in which:
- Figure 1 is a diagram of a component portion of an embodiment of a mold core;
- Figure 2 is a diagram showing an embodiment of a mold core;
- Figure 3 is a diagram showing an intermediate step in an implementation of a method in accordance with the invention making use of a mold core; and
- Figure 4 is a diagram showing an embodiment of a molded part obtained by the method in accordance with the invention.

Elements that are structurally and functionally identical and that are present in more than one distinct figure or illustration are given the same single numeric or alphanumeric reference in each of them.

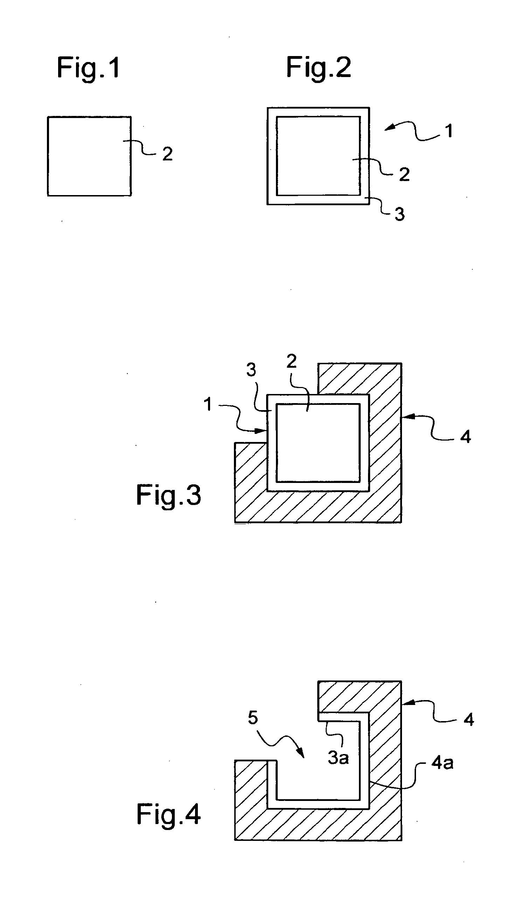

Figures 1 and 2 are diagrams showing how a mold core 1 is made. The mold core 1 comprises a filler material 2 and sealing means 3. The filler material is solid and is shaped, e.g. by machining, as a function of the shape of the future molded part 4.

The filler material 2 is preferable removable in a liquid or by any other physical or chemical principle.

The sealing means 3 includes at least one binder material, encouraging the establishment of physical and/or chemical bonding with an impregnation resin.

The sealing means 3 also include at least one additional material that presents thermal, mechanical, physical, and/or chemical properties that are additional relative to the properties of the other materials constituting the composite part.

In an embodiment in accordance with the invention, at least one additional material is selected from any family of materials comprising that increase the mechanical strength or toughness and improve the resistance to impacts of the sealing means 3.

In an embodiment in accordance with the invention, at least one additional material is selected from any family of materials that increase the anti-abrasive properties of the sealing means 3.

In another embodiment, at least one additional material is selected from any family of materials that increase the surface strength of the sealing means 3 against chemical or biological attack.

In another embodiment, at least one additional material is selected from any family of materials that contribute to make the sealing means 3, and consequently also the part 4, non-flammable, flame-retardant or low in emission of smoke and toxic substances.

In another embodiment, at least one additional material is selected from any family of materials that encourage bonding of the sealing means 3 with another element, for instance by thermoplastic welding.

It is clear that all of the above-mentioned functions and properties can be found in a single additional material or in an association of several additional materials. The term association should be understood as meaning a mixture or a compound for applying in the form of a single layer such as a varnish or a laminar assembly of different layers of distinct materials.

Figures 3 and 4 are diagrams, very much in outline, showing an implementation of a molding method in accordance with the invention.

The method consists in using a mold core 1 including the sealing means 3 and in placing it in a molding device. The device is a known device and is therefore not described in greater detail. Figure 3 thus shows the molded part 4 still unseparated from its mold core 1.

Once the conventional molding operations have been completed, including an operation of causing the part 4 to solidify by providing heat, the mold core 1 is removed, and more precisely, the filler material 2 is dissolved using a liquid, e.g. water, or removed by any other physical or chemical method. This dissolving operation is likewise itself known.

This produces the part 4 presenting a cavity 5, as shown in Figure 4. Cutting or machining then enables the sealing means 3 to be fitted to match the dimensions of the part 4, thereby constituting a functional coating 3a presenting the same functions as those incorporated in the sealing means 3. The functional coating 3a, intimately bonded to the inside surface 4a of the part 4, confers novel properties to said surface 4a and also to said part 4.

The method in accordance with the invention may for example comprise steps specific to an R.T.M. method for performing the resin-impregnation operation and the solidification operation.

In another implementation, the method in accordance with the invention comprises steps specific to a V.I. method for performing the resin-impregnation operation and the solidification operation.

In another implementation, the method in accordance with the invention comprises steps for covering additional inner and outer surfaces of the composite part, with the functional coating.

## Claims

1. A method of molding a composite part (4) or a portion of a part, the composite part being hollow and comprising at least one reinforcing layer based at least on a composite material comprising fibers, fabrics, or textiles impregnated with an impregnation matrix and at least one functional coating (3a) that is localized or complete, to improve the mechanical, thermal, physical, and/or chemical properties of said part, the method consisting in:
- using a mold core (1) including sealing means (3) and at least one additional material providing thermal, mechanical, physical, and/or chemical properties that are additional to those of the other materials constituting the composite part (4), said mold core (1) comprising a solid or liquid filler material (2) that is removable, said filler material (2) presenting a shape that is determined as a function of the part (4) to be molded, said sealing means (3) of the mold core (1) covering the entire outside surface of the filler material (2), , said mold core (1) being at least partially removable;
- wrapping or draping the mold core (1) with a composite material to shape the part (4); and
- solidifying the composite material by applying heating;
the method being **characterized in that** said at least one additional material is selected from any family of materials that increase the mechanical strength, toughness and the resistance to impacts of the sealing means (3) or said at least one additional material is selected from any family of materials that increase the anti-abrasive properties of the sealing means (3) and in using the mold core (1) for first making the mould sealed during the molding method through sealing means and then using these sealing means, at least partly bonded to the composite part (4) ; the sealing means (3) including at least one binder material selected from a family of materials comprising polyamide films, thermoplastic films or coatings, carbon nanotube papers "bucky papers", PTFE films, phenolic resins, or thermoset resins, phenolics resins, benzoxazines resins or epoxies resins, said sealing means (3) remaining inside the part (4) to constitute the function coating (3a) of the composite part (4).

2. The method according to claim 1,
**characterized in** removing, e.g. dissolving, the removable filler material (2) after the operation of solidifying the composite part (4).

3. The method according to claim1,
**characterized in that** it comprises steps specific to a Resing Transfer Moulding method for performing the resin-impregnation operation and the solidification operation.

4. The method according to claim1,
**characterized in that** it comprises the steps of a Vaccum Infusion moulding method for performing the resin-impregnation operation and the solidification operation.

5. The method according to any one of claims 1 to 4,
**characterized in** covering additional and outer surfaces of the composite part (4) with the functional coating (3a).

6. The method according to any one of claims 1 to 5,
**characterized in** selecting the sealing means (3) having a melting temperature lying between the injectionlinfusion temperature of the matrix/resin and the curing temperature of the composite part (4).

7. The method according to any one of claims 1 to 5,
**characterized in** selecting the sealing means (3) having a melting temperature which is higher than the curing temperature of the composite part (4).

8. The method according to any one of claims 1 to 5,
**characterized in that** it consists in selecting the sealing means (3) comprising at least two layers, one layer having a melting temperature which is lower than the injection/infusion temperature of the matrix/resin, the other layer having a melting temperature which is higher than the injection/infusion temperature of the matrix/resin.

## Patentansprüche

1. Verfahren zum Formen eines Verbundteils (4) oder eines Teilbereichs eines Teils, wobei das Verbundteil hohl ist und mindestens eine Verstärkungsschicht aufweist auf der Grundlage mindestens eines Verbundmaterials, welches Fasern, Stoffe oder Textilwaren aufweist, die mit einer Imprägnierungsmatrix imprägniert sind und mindestens eine funktionelle Beschichtung (3a), die örtlich begrenzt oder umfassend ist, um die mechanischen, thermischen, physikalischen und/oder chemischen Eigenschaften dieses Teils zu verbessern, wobei das Verfahren darin besteht:
- einen Formkern (1) zu verwenden, der Dichtungsmittel (3) und mindestens ein zusätzliches Material aufweist, das thermische, mechanische, physikalische und/oder chemische Eigenschaften zusätzlich zu denen der anderen Materialien liefert, aus denen das Verbundteil (4) besteht, wobei der Formkern (1) ein festes oder flüssiges Hüllmaterial (2) aufweist, das entfernbar ist, wobei das Füllmaterial (2) eine Form hat, die bestimmt ist in Abhängigkeit von dem zu formenden Teil (4), wobei die Dichtmittel (3) des Formkerns (1) die gesamte Außenfläche des Füllmaterials (2) bedecken, wobei der Formkern (1) zumindest teilweise entfernbar ist,
- den Formkern (1) mit einem Verbundmaterial einzuwickeln oder zu behängen, um das Teil (4) zu formen, und
- das Verbundmaterial durch Anwendung von Wärme zu verfestigen,
**dadurch gekennzeichnet, dass** das mindestens eine zusätzliche Material aus einer beliebigen Familie von Materialien ausgewählt ist, die die mechanische Festigkeit, Belastbarkeit und Schlagfestigkeit des Dichtungsmittels (3) erhöht, oder das mindestens eine zusätzliche Material aus einer beliebigen Familie von Materialien ausgewählt ist, die die abriebfesten Eigenschaften des Dichtungsmittels (3) erhöhen, und dadurch, dass der Formkern (1) verwendet wird, um zuerst die Gießform während des Gießverfahrens durch Dichtungsmittel abzudichten und um dann diese Dichtungsmittel, die zumindest teilweise mit dem Verbundteil (4) verklebt sind, zu verwenden, wobei die Dichtungsmittel (3) mindestens ein Bindemittel aufweisen, das aus einer Materialfamilie ausgewählt ist, die Polyamidfilme, thermoplastische Filme oder Beschichtungen, Kohlenstoff Nanoröhrenpapier, sog. "Bucky Papers", PTFE-Folien, Phenolharze, oder duroplastische Harze, Benzoxazinharze oder Epoxyharze umfassen, wobei die Dichtungsmittel (3) innerhalb des Teils (4) verbleiben, um die funktionelle Beschichtung (3a) des Verbundteils (4) zu bilden.

2. Verfahren nach Anspruch 1,
**gekennzeichnet durch** Entfernen, z.B. Auflösen, des entfernbaren Füllmaterials (2) nach dem Härten des Verbundteils (4).

3. Verfahren nach Anspruch 1,
**dadurch gekennzeichnet, dass** es Schritte aufweist, die typisch für ein Spritzpressverfahren sind, um das Harz zu imprägnieren und das Härten auszuführen.

4. Verfahren nach Anspruch 1,
**dadurch gekennzeichnet, dass** es Schritte eines Vakuuminfusionsverfahrens aufweist, um die Harzimprägnierung und die Verfestigung durchzuführen.

5. Verfahren nach einem der Ansprüche 1 bis 4,
**gekennzeichnet durch** Bedecken von zusätzlichen und äußeren Flächen des Verbundteils (4) mit der funktionellen Beschichtung (3a).

6. Verfahren nach einem der Ansprüche 1 bis 5,
**gekennzeichnet durch** Auswählen des Dichtungsmaterials (3), welches eine Schmelztemperatur aufweist, die zwischen der Einspritz-/Infusionstemperatur der Matrix/des Harzes und der Aushärttemperatur des Verbundteils (4) liegt.

7. Verfahren nach einem der Ansprüche 1 bis 5,
**gekennzeichnet durch** Auswählen des Dichtungsmaterials (3), das eine Schmelztemperatur hat, die höher ist als die Aushärttemperatur des Verbundteils (4).

8. Verfahren nach einem der Ansprüche 1 bis 5,
**dadurch gekennzeichnet, dass** es darin besteht, das Dichtungsmittel (3) so auszuwählen, dass es mindestens zwei Schichten aufweist, eine Schicht, die eine Schmelztemperatur aufweist, die kleiner ist als die Einspritz-/Infusionstemperatur der Matrix/des Harzes, wobei die andere Schicht eine Schmelztemperatur aufweist, die höher ist als die Einspritz-/Infusionstemperatur der Matrix/des Harzes.

## Revendications

1. Procédé de moulage d'une pièce composite (4) ou d'une partie de pièce, la pièce en composite étant creuse et comprenant au moins une couche de renforcement basée sur au moins un matériau composite comprenant des fibres, tissus ou textiles imprégnés d'une matrice d'imprégnation et au moins un revêtement fonctionnel (3a) local ou complet, pour améliorer les propriétés mécaniques, thermiques, physiques et/ou chimiques de ladite pièce, ce procédé consistant à :
- utiliser un noyau de moule (1) qui inclut des moyens d'étanchéité (3) et au moins un matériau supplémentaire assurant les propriétés thermiques, mécaniques, physiques et/ou chimiques en complément des autres matériaux qui constituent la pièce composite (4), ledit noyau de moule (1) comprenant un matériau de remplissage solide ou liquide (2) pouvant être retiré, ledit matériau de remplissage (2) présentant une forme déterminée en fonction de la pièce (4) à mouler, lesdits moyens d'étanchéité (3) du noyau de moule (1) recouvrant la totalité de la surface extérieure du matériau de remplissage (2), ledit noyau de moule (1) pouvant être au moins partiellement retiré ;
- envelopper ou draper le noyau de moule (1) d'un matériau composite pour former la pièce (4) ;
- solidifier le matériau composite par application de chaleur ;
ce procédé étant **caractérisé en ce que** ledit matériau supplémentaire est choisi dans une famille quelconque de matériaux renforçant la résistance mécanique, la dureté et la résistance aux impacts du moyens d'étanchéité (3) ou ledit matériau supplémentaire est choisi dans une famille quelconque de matériaux renforçant les propriétés anti-abrasives du moyens d'étanchéité (3) et **en ce que** le noyau de moule (1) est utilise pour réaliser en premier lieu le moule étanchéfié durant le processus de moulage grâce aux moyens d'étanchéité puis d'utiliser ce moyens d'étanchéité, au moins appliqué à la pièce composite (4), les moyens d'étanchéité (3) comprenant au moins un liant adhésif choisi dans une famille de matériaux comprenant des films de polyamide, des films ou revêtements thermoplastiques, des feuilles de nanotubes de carbone (buckypaper), des films PTFE, ou des résines thermodurcissables, des résines phénoliques, des résines de benzoxazine ou des résines époxy, lesdits moyens d'étanchéité (3) se déposant à l'intérieur de la pièce (4) pour constituer le revêtement fonctionnel (3a) de la pièce composite (4).

2. Procédé selon la revendication 1,
**caractérisé par** le retrait, par dissolution par exemple, du matériau de remplissage pouvant être retiré (2) après l'opération de solidification de la pièce composite (4).

3. Procédé selon la revendication 1,
**caractérisé en ce qu'**il comprend les étapes spécifiques du procédé de moulage par injection de résine pour réaliser les opérations d'imprégnation de résine et de solidification.

4. Procédé selon la revendication 1,
**caractérisé en ce qu'**il comprend les étapes spécifiques du procédé de moulage par infusion sous vide pour réaliser les opérations d'imprégnation de résine et de solidification.

5. procédé selon l'une quelconque des revendications 1 à 4,
**caractérisé par** le revêtement des surfaces extérieures et de surfaces supplémentaires de la pièce composite (4) grâce à un revêtement fonctionnel (3a).

6. Procédé selon l'une quelconque des revendications 1 à 5,
**caractérisé par** le choix de moyens d'étanchéité (3) dont la température de fusion se situe entre la température d'injectionld'infusion de la matrice/résine et la température de durcissement de la pièce composite (4).

7. Procédé selon l'une quelconque des revendications 1 à 5,
**caractérisé par** le choix de moyens d'étanchéité (3) dont la température de fusion est supérieure à la température de durcissement de la pièce composite (4).

8. Procédé selon l'une quelconque des revendications 1 à 5,
**caractérisé en ce qu'**il consiste dans le choix de moyens d'étanchéité (3) comportant d'au moins deux couches, une couche ayant une température de fusion inférieure à la température d'injection/d'infusion de la matrice/résine, l'autre couche ayant une température de fusion supérieure à la température d'injection/d'infusion de la matrice/résine.
